# FASCICULE DE BREVET EUROPEEN

(11) **EP 2 635 788 B1**
(45) Date de publication et mention de la délivrance du brevet: **02.07.2014**
(21) Numéro de dépôt: 11785745.8
(22) Date de dépôt: 25.10.2011
(51) Int. Cl.: F02K 1/72

(54) **DiSPOSITIF D'INVERSION DE POUSSÉE SANS BIELLE DANS LA VEINE**
SCHUBUMKEHRVORRICHTUNG OHNE STEUERSTANGE IM STROM
THRUST REVERSER DEVICE WITHOUT A CONTROL ROD IN THE STREAM

(30) Priorité: 03.11.2010 FR 1059033
(43) Date de publication de la demande: 11.09.2013
(73) Titulaire: Aircelle, 76700 Gonfreville L'Orcher (FR)
(72) Inventeur: HURLIN, Hervé, F-91430 Igny (FR); KERBLER, Olivier, F-92400 Courbevoie (FR); DEZEUSTRE, Nicolas, F-76600 Le Havre (FR); LE BOULICAUT, Loïc, F-76610 Le Havre (FR)
(74) Mandataire: Gaillarde, Frédéric F. Ch.
(86) Numéro de dépôt international: PCT/FR2011/052479
(87) Numéro de publication internationale: WO 2012/059662

(56) Documents cités:
- EP-A1- 1 843 031
- EP-A2- 2 243 945
- FR-A1- 2 907 512
- US-A- 4 373 328
- US-A1- 2010 115 958

## Description

La présente invention se rapporte à un dispositif d'inversion de poussée pour nacelle de turboréacteur.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en amont du turboréacteur, une section médiane destinée à entourer une soufflante du turboréacteur, une section aval destinée à entourer la chambre de combustion du turboréacteur et intégrant éventuellement des moyens d'inversion de poussée, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Une nacelle comprend généralement une structure externe, dite Outer Fixed Structure (OFS), qui définit, avec une structure interne concentrique de la section arrière, dite Inner Fixed Structure (IFS), entourant la structure du turboréacteur proprement dite en arrière de la soufflante, un canal annulaire d'écoulement, encore appelé veine secondaire, visant à canaliser un flux d'air froid, dit secondaire, qui circule à l'extérieur du turboréacteur.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles. Des portes de blocage complémentaires, également appelées volets, activées par le coulissement du capotage, permettent généralement une fermeture de la veine en aval des grilles de manière à optimiser la réorientation du flux froid.

Ces volets sont montés pivotants, par une extrémité amont, sur le capot coulissant entre une position rétractée dans laquelle ils assurent, avec ledit capot mobile, la continuité aérodynamique de la paroi interne de la nacelle et une position déployée dans laquelle, en situation d'inversion de poussée, ils viennent obturer au moins partiellement le canal annulaire en vue de dévier un flux de gaz vers les grilles de déviation découvertes par le coulissement du capot mobile. Le pivotement des volets est guidé par des biellettes rattachées, d'une part, au volet, et d'autre part, à un point fixe de la structure interne délimitant le canal annulaire.

Afin de pallier certains problèmes liés à l'entraînement de ces volets de blocage ainsi qu'au perturbations aérodynamiques que les biellettes traversant la veine génèrent, il a été proposé des dispositifs d'inversion de poussée sans bielle traversant la veine de circulation d'air.

On pourra notamment se reporter à la demande FR 2 907 512 ainsi qu'à la demande FR 09/53630, non encore publiée, décrivant de tels inverseurs de poussée.

On notera que le volet de blocage peut, en position de jet direct, assurer la continuité intérieure du capot mobile et constituer une paroi de la veine de circulant ou se trouver escamoté à l'intérieur dudit capot mobile. Cette dernière solution permet de réduire encore les accidents de surfaces dans la veine de circulation et d'augmenter la surface intérieure du capot mobile pouvant être traitée acoustiquement. Un tel dispositif est représenté notamment dans le document EP 1 843 031. La mise en oeuvre de volets de blocage escamotés totalement à l'intérieur du capot mobile permet une réduction importante de la trainée et de la masse de l'ensemble, et par voie de conséquence, une diminution de la consommation de carburant et une amélioration des performances acoustiques.

Par ailleurs, l'ouverture du volet doit respecter une certaine cinématique par rapport à la cinématique d'ouverture du capot mobile et d'activation des grilles.

Plus précisément, la cinématique d'ouverture des volets de blocage doit permettre de perturber le moins possible la pression d'air dans la veine et plus généralement dans la nacelle afin de réduire les perturbations dans l'écoulement d'air et leur impact sur le fonctionnement du turboréacteur.

Plus précisément, la section d'évacuation d'air du turboréacteur doit être gardée de préférence sensiblement constante.

Ainsi, si les volets de blocage sont déployés trop tôt, notamment bien avant que le passage d'inversion soit ouvert à travers la nacelle, la section d'évacuation d'air sera inférieure à la section d'évacuation disponible normalement en jet direct et il s'ensuivra une augmentation importante et soudaine de la pression d'air dans la veine du turboréacteur avant que le passage soit totalement ouvert et que la pression de circulation normale se rétablisse.

Réciproquement, si les volets de blocage sont déployés trop tard, alors la section de passage d'inversion vient s'ajouter à la section disponible en jet direct, la section totale d'évacuation étant alors supérieure à la section d'évcuation normale en jet direct, et il s'ensuit une baisse de pression

Dans le cas de volets de blocage pouvant être escamotés à l'intérieur du capot mobile, il convient aussi de prévoir un léger retard à leur déploiement afin qu'ils ne viennent pas buter dans une extrémité amont du capot mobile.

La présence de bielletes traversant la veine et liées à une structure interne fixe conformément aux modes de réalisation antérieurs permet de résoudre relativement aisément ce type de problèmes.

En effet, en tout état de cause, afin de pouvoir pivoter, le volet de blocage doit être relié, d'une part, à une partie fixe, et d'autre part, à une partie mobile.

Dans les cas des modes de réalisation antérieurs avec biellettes traversant la veine, la partie mobile est généralement le capot mobile et la partie fixe est donc la structure interne fixe.

La surface d'attache potentielle offerte par cette structure interne fixe est relativement importante et elle permet donc un contrôle relativement précis et satisfaisant de la cinématique d'ouverture. Plus précisément, en fonction de la cinématique recherchée il sera facilement possible de lier les biellettes un peu plus en amont ou un peu plus en aval sur la structure interne fixe et à travers la veine de manière à induire une cinématique d'ouverture et de fermeture légèrement différente.

Par ailleurs, en raison de la forme sensiblement cylindrique de la nacelle, les volets peuvent être amenés à se chevaucher légèrement en position d'ouverture. Il convient donc de s'assurer que les volets adjacents possèdent bien des cinématiques d'ouverture et de fermeture très légèrement différentes de manière à s'assurer que les volets adjacents se chevauchent correctement et ne rentrent pas en collision.

De telles cinématiques sont difficiles à mettre en oeuvre pour des volets sans bielle traversant la veine, puisque le choix de leurs points d'attache est considérablement plus réduit que sur la structure interne fixe.

Dans les cas d'inverseur de poussée sans bielle dans la veine, la partie mobile à laquelle le volet est lié pour pivoter reste le capot mobile, le choix de la partie fixe est en revanche plus limité et il pourra notamment s'agir d'un cadre avant des grilles d'inversion. Il convient également de tenir compte du faible espace disponible à l'intérieur du capot mobile.

On comprend donc qu'il sera difficile de placer le point d'attache un peu plus en amont ou un peu plus en aval en fonction de la cinématique recherchée.

En outre, le développement des dispositifs d'inversion de poussée a également permis de mettre en oeuvre des dispositifs d'inversion de poussée adaptés à des nacelles à fort taux de dilution possédant une section aval relativement courte par rapport à la longueur de grilles de déviation nécessaires à l'inversion du flux qu'elles génèrent.

De tels dispositifs d'inversion de poussée, tels que par exemple décrit dans la demande US 2010/0212286 ainsi que dans la demande non encore publiée FR 10/56006 prévoient la mise en oeuvre de grilles de déviation au moins partiellement rétractables dans l'épaisseur de la section médiane adjacente.

De tels systèmes permettent de réduire la longueur de la section aval, et donc de la trainée de la nacelle.

Un problème de ces systèmes est leur compatibilité avec la technologie d'inverseur de poussée sans bielle traversant la veine évoquée précédemment.

Tout d'abord, le cadre avant des grilles de déviation ne constitue plus un point fixe pour la liaison des volets de blocage.

De plus, les cinématiques de déploiement des grilles et des volets sont très différentes. C'est pourquoi le document US 2010/0212286 conserve un système de tringlerie traversant la veine de circulation d'air.

Ainsi, la réalisation d'un dispositif d'inversion de poussée sans bielle d'entraînement des volets de blocage traversant la veine et à grilles rétractables nécessitent une mise en oeuvre particulière dont la solution est l'objet de la présente demande.

Pour ce faire, la présente invention se rapporte à une nacelle de turboréacteur présentant une section aval équipée d'au moins un dispositif d'inversion de poussée comprenant, d'une part, des moyens de déviation d'au moins une partie d'un flux d'air du turboréacteur, et d'autre part, au moins un capot mobile en translation selon une direction sensiblement parallèle à un axe longitudinal de la nacelle entre une position de fermeture dans laquelle il assure la continuité aérodynamique de la nacelle et couvre les moyens de déviation et une position d'ouverture dans laquelle il ouvre un passage dans la nacelle et découvre les moyens de déviation, le dispositif d'inversion de poussée comprenant par ailleurs, au moins un volet de blocage monté pivotant par au moins une extrémité rattachée à une partie arrière des moyens de déviation, et liée au capot mobile de manière glissante, caractérisée en ce que l'extrémité de pivotement est liée à la partie arrière des moyens de déviation également de manière translatable depuis ladite partie arrière des moyens de déviation vers l'aval de la nacelle.

Ainsi, en prévoyant un montage également en translation de l'extrémité pivotante du volet de blocage, il est possible de mettre en oeuvre de manière relativement simple une cinématique précise de l'ouverture et de la fermeture des volets de blocage. Par ailleurs, la modélisation et simulation numérique du modèle en est également grandement simplifiée.

Un tel système permet, en modifiant notamment la longueur et la forme du trajet en translation, un réglage fin de l'ouverture des volets de blocage notamment si l'on souhaite avoir une ouverture non linéaire du débit d'air. De cette manière, il est également possible d'introduire un retard à l'ouverture (le volet commence par translater avant de pivoter) selon le profil de variation de pression souhaitée.

Selon un mode de réalisation préféré, l'extrémité de pivotement du volet est liée à la partie arrière des moyens de déviation par l'intermédiaire par l'intermédiaire d'au moins une coulisse s'étendant depuis ladite partie arrière vers l'aval de la nacelle. Cette coulisse permet le mouvement additionnel de translation.

De manière avantageuse, l'extrémité pivotante du volet est montée mobile en translation selon une direction sensiblement longitudinale de la nacelle. On pourra également mettre en oeuvre une coulisse présentant une portion courbe. Notamment, afin d'éviter toute collision entre volets adjacents, on pourra prévoir des formes / longueur, différentes de coulisses pour les volets adjacents.

Avantageusement, l'extrémité pivotante du volet de blocage est montée pivotante par l'intermédiaire d'au moins un galet de roulement.

Alternativement, un autre mode de réalisation possible est l'utilisation de crémaillères et de roues dentées.

De manière préférentielle, les moyens de déviation comprennent au moins une grille de déviation.

De manière avantageuse, la partie arrière des moyens de déviation est un cadre arrière au moins partiellement périphérique des moyens de déviation.

Avantageusement, le volet de blocage est lié au capot mobile de manière glissante au capot mobile.

Selon une première variante de réalisation, le volet est lié de manière glissante au capot mobile par l'intermédiaire d'une bielle présentant une première extrémité rattachée au volet et une deuxième extrémité apte à coulisser à l'intérieur d'une glissière correspondante du capot mobile.

Selon une deuxième variante de réalisation, le volet est lié de manière glissante au capot mobile par l'intermédiaire d'une bielle présentant une première extrémité rattachée au capot mobile et une deuxième extrémité apte à coulisser à l'intérieur d'une glissière correspondante dudit volet.

Selon un mode de réalisation complémentaire avantageux, lesdits moyens de déviation sont eux-mêmes montés mobiles entre une position rétractée, correspondant à la position de fermeture du capot mobile, et dans laquelle les moyens de déviation sont escamotées au moins partiellement dans une structure fixe adjacente de la nacelle, et une position déployée, correspondant à la position d'ouverture du capot mobile, dans laquelle les moyens de déviation s'étendent au moins presque totalement à travers l'ouverture dégagée par le capot mobile.

De manière préférentielle, la structure fixe adjacente est une section médiane destinée à entourer une soufflante du turboréacteur.

Selon un premier mode de réalisation, en position repliée, le volet forme au moins une partie d'une surface de circulation d'air.

Selon un deuxième mode de réalisation, en position repliée, le volet de blocage est totalement escamoté à l'intérieur du capot mobile.

De manière avantageusement complémentaire, la nacelle comprend au moins un déflecteur présentant une première extrémité liée au volet de blocage et une deuxième extrémité lié aux moyens de déviation et conçu pour améliorer la continuité aérodynamique le long d'une surface de flux d'air inversé définie par le volet de blocage et le déflecteur.

La présente invention sera mieux comprise à la lumière de la description détaillée en regard du dessin annexé dans lequel :
- La figure 1 est une représentation schématique globale d'une nacelle de turboréacteur présentant une section arrière vue dont l'intérieur est vu en transparence.
- La figure 2 est une représentation schématique en coupe longitudidnale de la nacelle de la figure 1.
- Les figures 3 et 4 sont des représentations schématiques partielles d'une nacelle selon un premier mode de réalisation de l'invention, la nacelle possédant un dispositif d'inversion de poussée à grilles fixes respectivement en position fermée et ouverte.
- Les figures 5 et 6 sont des représentations schématiques partielles d'une nacelle selon un premier mode de réalisation de l'invention, la nacelle possédant un dispositif d'inversion de poussée à grilles rétractables, respectivement en position fermée et ouverte.
- Les figures 7 à 9 montrent le fonctionnement d'un troisième mode de réalisation de l'invention.

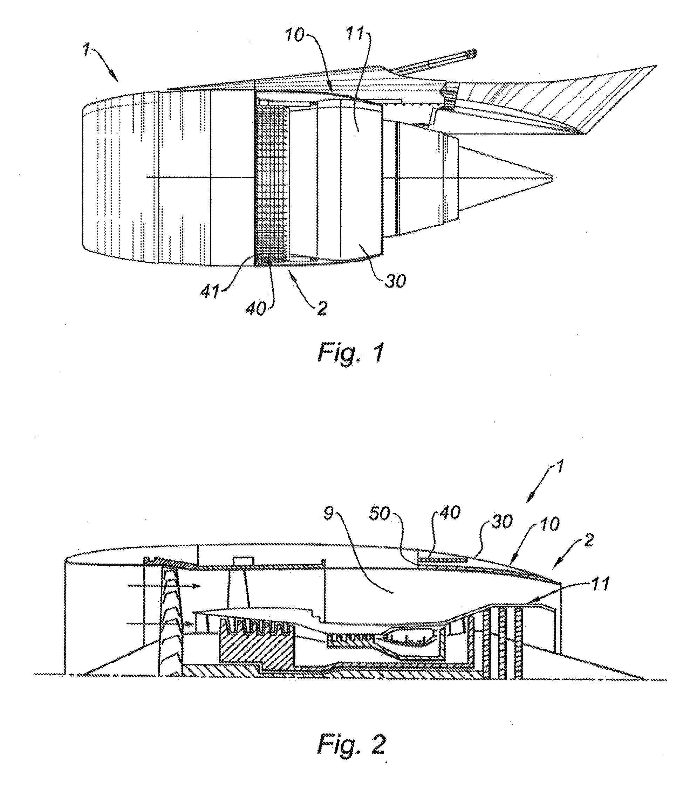

En référence aux figures 1 et 2, une nacelle 1 est destinée à constituer un logement tubulaire pour un turboréacteur double flux et sert à canaliser les flux d'air qu'il génère, à savoir un flux d'air chaud traversant une chambre de combustion et un flux d'air froid généré par l'intermédiaire d'aubes d'une soufflante circulant à l'extérieur du corps du turboréacteur.

La nacelle 1 possède, de façon générale, une structure comprenant une section amont formant une entrée d'air, une section médiane entourant la soufflante du turboréacteur et une section aval entourant le turboréacteur, désignée par la référence générale 2 sur les figures 1 et 2.

La section aval 2 comprend une structure externe 10 comportant un dispositif d'inversion de poussée et une structure interne 11 de carénage de moteur définissant avec la structure externe 10 une veine 9 destinée à la circulation d'un flux d'air froid, dans le cas de la nacelle de turboréacteur double flux telle que présentée ici.

Le dispositif d'inversion de poussée comprend un capot 30 monté mobile en translation selon une direction sensiblement parallèle à un axe longitudinal de la nacelle 1.

Ce capot 30 est apte à passer alternativement d'une position de fermeture dans laquelle il assure la continuité aérodynamique des lignes de la section aval 2 de la nacelle 1 et couvre des moyens de déviation de flux d'air 40, à une position d'ouverture dans laquelle il ouvre un passage dans la nacelle 1 en découvrant les moyens de déviation 40 de flux d'air.

Plus précisément, on notera qu'un dispositif d'inversion de poussée comprend généralement au moins deux capots mobiles 3 sensiblement hémicylindriques (nacelle dite en C ou en D) montées sur la nacelle de manière à pouvoir coulisser le long de glissières (non représentées). Il peut également ne comprendre qu'un seul capot mobile unitaire (nacelle dite en O).

Selon l'exemple représenté, les moyens de déviation 40 sont des grilles de déviation présentant chacune une pluralité d'aubes déflectrices.

Tel qu'illustré sur la figure 2, la section aval 2 comprend généralement, en outre, un cadre avant 50 que prolonge en aval le capot 30 et qui assure le rattachement de la section aval 2 avec une section médiane entourant une soufflante du turboréacteur.

Le cadre avant 50 sert également de support aux moyens de déviation 41.

La translation du capot mobile 30 vers l'aval de la nacelle dégage dans celle-ci une ouverture à travers laquelle le flux secondaire du turboréacteur peut s'échapper au moins partiellement, cette portion de flux étant réorientée vers l'avant de la nacelle par les moyens de déviations 41, générant de ce fait une contre-poussée apte à aider au freinage de l'avion.

Afin d'augmenter la portion de flux secondaire traversant les moyens de déviation 41, le dispositif d'inversion de poussée peut comprendre une pluralité de volets d'inversion 60 (non représentés sur les figures 1 et 2), répartis sur la circonférence interne du capot 30 montés chacun pivotant entre une position rétractée dans laquelle le volet 60 ferme l'ouverture et assure la continuité aérodynamique intérieure de la veine 9 et une position déployée dans laquelle, en situation d'inversion de poussée, il obture au moins partiellement le canal annulaire 9 en vue de dévier un flux de gaz vers l'ouverture à grilles de déviation 41. Un joint d'étanchéité (non représenté) est prévu entre le capot mobile 30 et le cadre avant 50 afin d'isoler le flux circulant dans le canal annulaire 9 du flux externe à la nacelle.

Selon une variante de réalisation connue, le volet 60 peut, en position de fermeture, être totalement escamoté à l'intérieur du capot mobile 30, ce dernier assurant lui-même la continuité aérodynamique intérieure de la veine 9.

Le dispositif d'inversion de poussée doit donc être équipé d'un système permettant un entraînement adapté des volets 60 avec le capot mobile 30 selon une cinématique approprié.

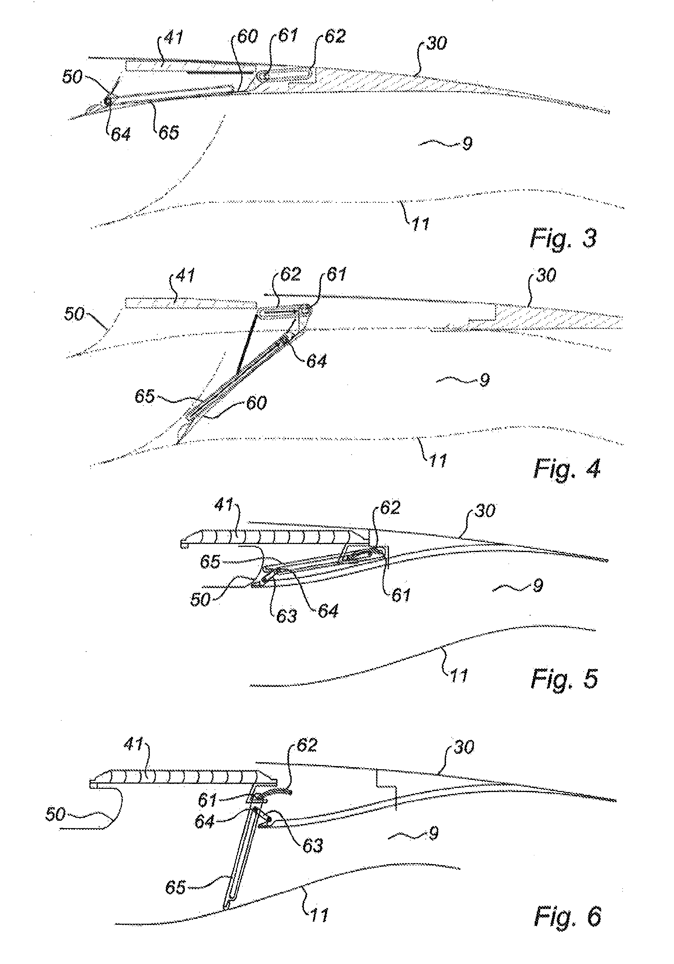

Selon un premier mode de réalisation représenté aux figures 3 et 4, les volets 60 de blocage sont montés pivotants par une extrémité rattachée à une partie arrière des moyens de déviation 41. Plus précisément, la partie arrière des moyens de déviation 41 peut être constituée par un cadre arrière de grilles, au moins partiellement périphérique.

Pour ce mode particulier de réalisation, les volets ou leur contrepartie seront équipés de joint d'étanchéité assurant la séparation entre la pression dans la veine secondaire et la pression extérieure ambiante quand l'inverseur est en position jet direct et que les volets sont escamotés.

Conformément à l'invention, l'extrémité pivotante du volet 60 de blocage est également montée mobile en translation depuis ladite partie arrière des moyens de déviation 41 vers l'aval de la nacelle.

Ce mouvement de translation additionnel est permis par l'insertion d'un galet de roulement 61, monté au niveau de l'extrémité de pivotement du volet 60, dans une coulisse 62 ou glissière s'étendant depuis la partie arrière des moyens de déviation 41 vers l'aval de la de la nacelle.

Selon le mode de réalisation représenté aux figures 3 et 4, la coulisse 62 est sensiblement rectiligne et s'étend selon une direction sensiblement longitudinale de la nacelle.

Comme il sera décrit pour les figures 5 et 6, la coulisse 62 peut bien évidemment présenter d'autres formes, notamment courbe, et les coulisses 62 pourront présenter des longueurs et formes différentes pour les différents volets.

La variation de longueur et de forme de la coulisse 62 permet une variation et une adaptation de la cinématique d'ouverture et de fermeture du volet 60 considéré.

Comme évoqué précédemment, les volets 60 adjacents pourront présenter des cinématiques d'ouverture et fermeture différentes afin d'éviter toute collision entre eux.

On notera que la coulisse 62 pourra être liée au volet 60 de blocage et le galet de roulement associé 61 monté fixe sur la partie arrière des moyens de déviation 41.

On notera également la présence d'un déflecteur 160 présentant une première extrémité liée à une glissière fixe sur le capot mobile 30 et une deuxième extrémité liée aux moyens de déviation 41 et conçu pour améliorer la continuité aérodynamique le long d'une surface de flux d'air inversé définie par le volet de blocage et le déflecteur.

De manière avantageuse, le volet 60 de blocage est lié de manière glissante au capot mobile 30, notamment par l'intermédiaire d'une bielle 63 présentant une première extrémité rattachée au capot mobile et une deuxième extrémité apte à coulisser à l'intérieur d'une glissière 65 correspondante dudit volet 60 au moyen d'un ou plusieurs galets de roulement 64.

La présence de la bielle 63 ou non pourra dépendre de la configuration de l'inverseur et pour certaines géométrie, elle peut ne pas être indispensable.

En position initiale fermée (figure 3), le volet 60 est rabattu et assure la continuité de la veine 9. Le galet de roulement 61 est en butée contre une extrémité amont de la coulisse 62.

En reculant lors de son ouverture, le capot mobile 30 fait reculer le galet de roulement 64, et par voie de conséquence le volet 60 ainsi que son galet 61 dans la glissière 62. Les géométries respectives des deux glissières 65 et6 2 permettent un basculement du volet 60 dans la veine 9 plus ou moins rapide.

Les figures 5 et 6 représentent un mode de réalisation particulier dans lequel lesdits moyens de déviation 41 sont eux-mêmes montés mobiles entre une position rétractée, correspondant à la position de fermeture du capot mobile 30, et dans laquelle les moyens de déviation 41 sont escamotées au moins partiellement dans une structure fixe adjacente de la nacelle, et une position déployée, correspondant à la position d'ouverture du capot mobile 30, dans laquelle les moyens de déviation s'étendent au moins presque totalement à travers l'ouverture dégagée par le capot mobile.

En l'espèce, la structure fixe adjacente est une section médiane destinée à entourer une soufflante du turboréacteur, les moyens de déviation 41 étant partiellement rétractables dans l'épaisseur de cette section médiane.

Selon le mode de réalisation représenté aux figures 5 et 6, le volet 60 de blocage est totalement escamoté à l'intérieur du capot mobile. Il est bien évidemment possible de prévoir un volet 60 assurant la continuité de la veine 9 comme pour le mode de réalisation précédent, et réciproquement.

Une difficulté du mode de réalisation représenté vient du fait que le volet 60 est généralement plus long que la portion des moyens de déviation 41 non rétractée dans la section médiane.

La glissière 62 joue donc un rôle essentiel permettant d'accommoder cette longueur excessive.

En position initiale fermée (figure 3), le volet 60 est rabattu et escamoté à l'intérieur du capot mobile 30 qui assure seul la continuité de la veine 9. Le galet de roulement 61 est en butée contre une extrémité aval de la coulisse 62.

Lors de l'ouverture du capot mobile 30, le capot mobile recule et entraîne les moyens de déviation 41 jusqu'à ce qu'elles viennent dans leur position déployée.

Une fois les moyens de déviation 41 déployés, le capot mobile 30 continue sa course en translation et le galet de roulement 61 du volet 60 translate le long de la coulisse 62 jusqu'à venir en butée contre une extrémité amont de la dite coulisse 62.

La course supplémentaire du capot 30 entraîne le pivotement du volet 60 autour de son galet de roulement 61 par l'intermédiaire de la bielle 63.

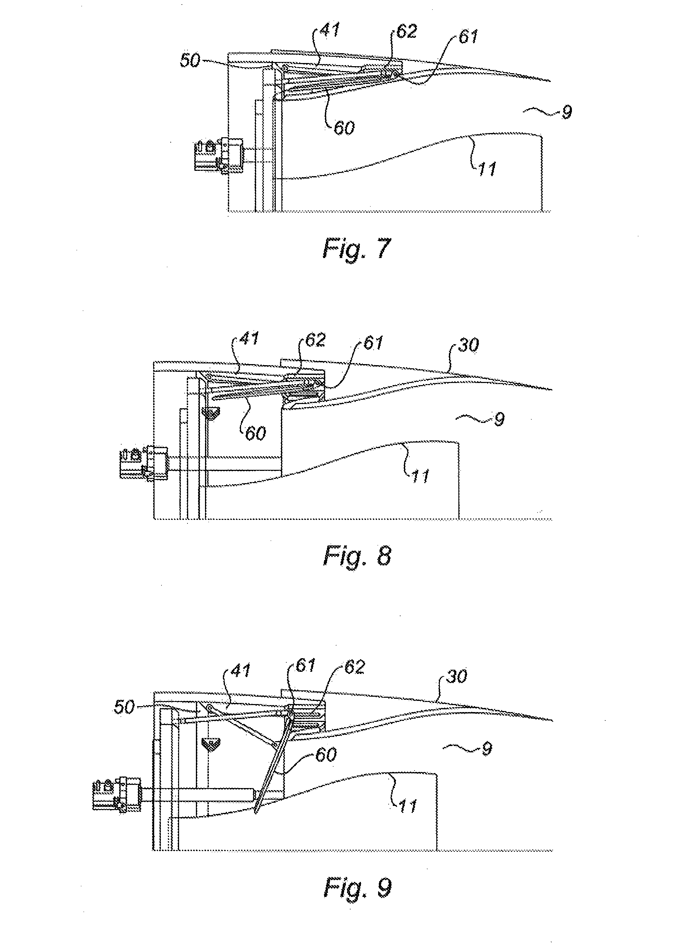

Les figures 7 à 9 montrent un troisième mode de réalisation dans lequel l'inverseur de poussée possède également des moyens de déviation 41 rétractables, mais dans lequel le volet 60 n'est plus lié au capot mobile 30.

En effet, comme représenté sur les figures, le volet 60 est lié d'une part aux moyens de déviation par une première bielle rattachée sensiblement au milieu du volet 60, et d'autre part, à un cadre avant fixe 50 par l'intermédiaire d'une deuxième bielle liée au volet au niveau de son point de pivotement.

En position initiale (figure 7) fermée, le volet 60 est rabattu et escamoté à l'intérieur du capot mobile 30 qui assure seul la continuité de la veine 9. Le galet de roulement 61 est en butée contre une extrémité aval de la coulisse 62. Dans l'exemple donné, le volet 60 est escamoté à l'intérieur du capot mobile 30, mais il est bien évidemment possible avec un volet assurant une partie de la surface d'écoulement d'air ou avec une ou plusieurs bielles traversant la veine 9.

Afin de déployer l'inverseur, des moyens d'actionnement de type vérins déplacent le capot mobile 30 en translation (figure 8), qui par l'intermédiaire d'une butée emmène les moyens de déviation 41 après une certaine course.

La translation des moyens de déviation 41 provoque le déplacement du galet de roulement 61 le long de sa coulisse 62, jusqu'à arriver en butée contre une extrémité amont de ladite coulisse 62, puis son pivotement dans la veine 9.

Un des avantages de ce mode de réalisation, est que la bielle de liaison au cadre avant fixe 50 permet de maintenir le point de pivotement du volet 60 à une position donnée de l'axe moteur (direction longitudinale).

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle (1) de turboréacteur présentant une section aval équipée d'au moins un dispositif d'inversion de poussée comprenant, d'une part, des moyens de déviation (41) d'au moins une partie d'un flux d'air du turboréacteur, et d'autre part, au moins un capot mobile (30) en translation selon une direction sensiblement parallèle à un axe longitudinal de la nacelle entre une position de fermeture dans laquelle il assure la continuité aérodynamique de la nacelle et couvre les moyens de déviation et une position d'ouverture dans laquelle il ouvre un passage dans la nacelle et découvre les moyens de déviation, le dispositif d'inversion de poussée comprenant par ailleurs, au moins un volet de blocage (60) monté pivotant par au moins une extrémité rattachée à une partie arrière des moyens de déviation, **caractérisée en ce que** l'extrémité de pivotement est liée à la partie arrière des moyens de déviation également de manière translatable depuis ladite partie arrière des moyens de déviation vers l'aval de la nacelle.

2. Nacelle (1) selon la revendication 1, **caractérisée en ce que** l'extrémité de pivotement du volet de blocage (60) est liée à la partie arrière des moyens de déviation (41) par l'intermédiaire par l'intermédiaire d'au moins une coulisse (62) s'étendant depuis ladite partie arrière vers l'aval de la nacelle.

3. Nacelle (1) selon l'une quelconque des revendications 1 ou 2, **caractérisée en ce que** l'extrémité pivotante du volet (60) est montée mobile en translation selon une direction sensiblement longitudinale de la nacelle.

4. Nacelle (1) selon l'une quelconque des revendications 1 à 3, **caractérisée en ce que** l'extrémité pivotante du volet de blocage (60) est montée pivotante par l'intermédiaire d'au moins un galet de roulement (61).

5. Nacelle (1) selon l'une quelconque des revendications 1 à 4, **caractérisée en ce que** les moyens de déviation (41) comprennent au moins une grille de déviation.

6. Nacelle (1) selon l'une quelconque des revendications 1 à 5, **caractérisée en ce que** la partie arrière des moyens de déviation (41) est un cadre arrière au moins partiellement périphérique des moyens de déviation.

7. Nacelle (1) selon l'une quelconque des revendications 1 à 6, **caractérisée en ce que** le volet de blocage (60) est lié au capot mobile (30) de manière glissante au capot mobile.

8. Nacelle (1) selon la revendication 7, **caractérisée en ce que** le volet de blocage (60) est lié de manière glissante au capot mobile (30) par l'intermédiaire d'une bielle présentant une première extrémité rattachée au volet et une deuxième extrémité apte à coulisser à l'intérieur d'une glissière correspondante du capot mobile.

9. Nacelle (1) selon la revendication 7, **caractérisée en ce que** le volet de blocage (60) est lié de manière glissante au capot mobile (30) par l'intermédiaire d'une bielle (63) présentant une première extrémité rattachée au capot mobile et une deuxième extrémité apte à coulisser à l'intérieur d'une glissière (65) correspondante dudit volet.

10. Nacelle (1) selon l'une quelconque des revendications 1 à 9, **caractérisée en ce que** lesdits moyens de déviation (41) sont eux-mêmes montés mobiles entre une position rétractée, correspondant à la position de fermeture du capot mobile (30), et dans laquelle les moyens de déviation sont escamotées au moins partiellement dans une structure fixe adjacente de la nacelle, et une position déployée, correspondant à la position d'ouverture du capot mobile, dans laquelle les moyens de déviation s'étendent au moins presque totalement à travers l'ouverture dégagée par le capot mobile

11. Nacelle (1) selon la revendication 10, **caractérisée en ce que** la structure fixe adjacente est une section médiane destinée à entourer une soufflante du turboréacteur.

12. Nacelle (1) selon l'une quelconque des revendications 1 à 11, **caractérisée en ce que**, en position repliée, le volet de blocage (60) forme au moins une partie d'une surface de circulation d'air.

13. Nacelle (1) selon l'une quelconque des revendications 1 à 12, **caractérisée en ce que**, en position repliée, le volet de blocage (60) est totalement escamoté à l'intérieur du capot mobile (30).

14. Nacelle (1) selon l'une quelconque des revendications 1 à 13, **caractérisée en ce qu'**elle comprend au moins un déflecteur présentant une première extrémité liée au volet de blocage (60) et une deuxième extrémité lié aux moyens de déviation (41) et conçu pour améliorer la continuité aérodynamique le long d'une surface de flux d'air inversé définie par le volet de blocage et le déflecteur.

## Patentansprüche

1. Turbostrahl-Triebwerksgondel (1), umfassend einen nachgelagerten Abschnitt, der mit mindestens einer Schubumkehrvorrichtung ausgestattet ist, die, einerseits, Mittel zur Umleitung (41) mindestens eines Teils eines Luftstroms des Turbostrahltriebwerks, und, andererseits, mindestens eine Verkleidung (30) umfasst, die in Translation in einer Richtung, die im Wesentlichen parallel zu einer Längsachse der Gondel ist, zwischen einer Verschlussposition, in der sie die aerodynamische Kontinuität der Gondel sicherstellt und die Umleitungsmittel schliesst, und einer Öffnungsposition, in der sie einen Durchgang in der Gondel öffnet und die Umleitungsmittel öffnet, beweglich ist, wobei die Schubumkehrvorrichtung außerdem mindestens eine Blockierklappe (60) umfasst, die drehbar an mindestens einem Ende montiert ist, das mit einem hinteren Teil der Umleitungsmittel verbunden ist, **dadurch gekennzeichnet, dass** das Drehende mit dem hinteren Teil der Umleitungsmittel auch auf verschiebbare Weise vom hinteren Teil der Umleitungsmittel hin zum nachgeordneten Teil der Gondel verbunden ist.

2. Gondel (1) nach Anspruch 1, **dadurch gekennzeichnet, dass** das Drehende der Blockierklappe (60) mit dem hinteren Teil der Umleitungsmittel (41) mit Hilfe von mindestens einer Profilschiene (62) verbinden ist, die sich von dem hinteren Teil hin zum nachgelagerten Teil der Gondel erstreckt.

3. Gondel (1) nach einem der Ansprüche 1 oder 2, **dadurch gekennzeichnet, dass** das Drehende der Klappe (60) in Translation beweglich gemäß einer im Wesentlichen Längsrichtung der Gondel montiert ist.

4. Gondel (1) nach einem der Ansprüche 1 bis 3, **dadurch gekennzeichnet, dass** das Drehende der Blockierklappe (60) drehend mit Hilfe von mindestens einer Laufrolle (61) montiert ist.

5. Gondel (1) nach einem der Ansprüche 1 bis 4, **dadurch gekennzeichnet, dass** die Umleitungsmittel (41) mindestens ein Umleitungsgitter umfassen.

6. Gondel (1) nach einem der Ansprüche 1 bis 5, **dadurch gekennzeichnet, dass** der hintere Teil der Umleitungsmittel (41) ein hinterer Rahmen ist, der mindestens teilweise peripher zu den Umleitungsmitteln ist.

7. Gondel (1) nach einem der Ansprüche 1 bis 6, **dadurch gekennzeichnet, dass** die Blockierklappe (60) mit der beweglichen Verkleidung (30) auf gleitbare Weise verbunden ist.

8. Gondel (1) nach Anspruch 7, **dadurch gekennzeichnet, dass** die Blockierklappe (60) auf gleitbare Weise mit der beweglichen Verkleidung (30) mit Hilfe einer Steuerstange verbunden ist, die ein erstes Ende aufweist, das mit der Klappe verbunden ist, und ein zweites Ende, das dazu in der Lage ist, im Innern eines entsprechenden Gleiters der beweglichen Verkleidung zu gleiten.

9. Gondel (1) nach Anspruch 7, **dadurch gekennzeichnet, dass** die Blockierklappe (60) auf gleitende Weise mit der bewerglichen Verkleidung (30) mit Hilfe einer Steuerstange (63) verbunden ist, der ein erstes Ende aufweist, das mit der beweglichen Verkleidung verbunden ist, und ein zweites Ende, das dazu in der Lage ist, im Innern eines entsprechenden Gleiters (65) der Klappe zu gleiten.

10. Gondel (1) nach einem der Ansprüche 1 bis 9, **dadurch gekennzeichnet, dass** die Umleitungsmittel (41) selbst zwischen einer zurückgezogenen Position, die der Verschlussposition der beweglichen Verkleidung (30) entspricht, und in der die Umleitungsmittel mindestgens teilweise in einer festen Struktur, die der Gondel benachbart ist, eingeklappt sind, und einer geöffneten Position, die der Öffnungsposition der beweglichen Verkleidung entspricht, in der sich die Umleitungsmittel mindestens fast vollständig durch die Öffnung erstrecken, die von der beweglichen Verkleidung freigesetzt ist, beweglich sind.

11. Gondel (1) nach Anspruch 10, **dadurch gekennzeichnet, dass** die feste benachbarte Struktur ein mittlerer Abschnitt ist, der ausgelegt ist, um ein Gebläse des Turbostrahltriebwerks zu umgeben.

12. Gondel (1) nach einem der Ansprüche 1 bis 11, **dadurch gekennzeichnet, dass** in der zurückgeklappten Position die Blockierklappe (60) mindestens einen Teil einer Luftzirkulationsfläche umfasst.

13. Gondel (1) nach einem der Ansprüche 1 bis 12, **dadurch gekennzeichnet, dass** in der zurückgeklappten Position die Blockierklappe (60) vollständig im Inneren der beweglichen Verkleidung (30) eingeklappt ist.

14. Gondel (1) nach einem der Ansprüche 1 bis 13, **dadurch gekennzeichnet, dass** sie mindestens ein Leitwerk umfasst, das ein erstes Ende aufweist, das mit der Blockierklappe (60) verbunden ist, und ein zweites Ende, das mit den Umleitungsmitteln (41) verbunden und entworfen ist, um die aerodynamische Kontinuität entlang einer umgekehrten Luftflussfläche, die von der Blockierklappe und dem Leitwerk definert ist, zu verbessern.

## Claims

1. A nacelle (1) of a turbojet engine having a downstream section equipped with at least one thrust reversal device comprising, on the one hand, means for deflecting (41) at least a portion of an air flow of the turbojet engine, and on the other side, at least one mobile cowl (30) in translation along a direction substantially parallel to a longitudinal axis of the nacelle between a closing position wherein it ensures the aerodynamic continuity of the nacelle and covers the deflecting means, and an opening position wherein it opens a passage in the nacelle and uncovers the deflecting means, the thrust reversal device further comprising, at least one blocking flap (60) pivotally mounted by at least one end fastened to a rear portion of the deflecting means, **characterized in that** the pivot end is connected to the rear portion of the deflecting means, also in a translatable manner from said rear portion of the deflecting means downstream of the nacelle.

2. The nacelle (1) according to claim 1, **characterized in that** the pivot end of the blocking flap (60) is connected to the rear portion of the deflecting means (41) via at least one slider (62) extending from said rear portion downstream of the nacelle.

3. The nacelle (1) according to any one of claims 1 or 2, **characterized in that** the pivoting end of the flap (60) is movably mounted in translation along a direction substantially longitudinal of the nacelle.

4. The nacelle (1) according to any one of claims 1 to 3, **characterized in that** the pivoting end of the blocking flap (60) is pivotally mounted via at least a bearing roller (61).

5. The nacelle (1) according to any one of claims 1 to 4, **characterized in that** the deflecting means (41) comprise at least one cascade.

6. The nacelle (1) according to any one of claims 1 to 5, **characterized in that** the rear portion of the deflecting means (41) is an at least partially peripheral rear frame of the deflecting means.

7. The nacelle (1) according to any one of claims 1 to 6, **characterized in that** the blocking flap (60) is connected to the mobile cowl (30) in a sliding manner to the mobile cowl.

8. The nacelle (1) according to claim 7, **characterized in that** the blocking flap (60) is connected in a sliding manner to the mobile cowl (30) via a rod having a first end fastened to the flap and a second end adapted to slide inside a corresponding slideway of the mobile cowl.

9. The nacelle (1) according to claim 7, **characterized in that** the blocking flap (60) is connected in a sliding manner to the mobile cowl (30) via a rod (63) having a first end fastened to the mobile cowl and a second end adapted to slide inside a corresponding slideway (65) of the flap.

10. The nacelle (1) according to any one of claims 1 to 9, **characterized in that** said deflecting means (41) are themselves movably mounted between a retracted position, corresponding to the closing position of the mobile cowl (30), and wherein the deflecting means are stowed at least partially in a fixed structure adjacent to the nacelle, and a deployed position, corresponding to the opening position of the mobile cowl, wherein the deflecting means extend at least almost totally through the opening cleared by the mobile cowl.

11. The nacelle (1) according to claim 10, **characterized in that** the adjacent fixed structure is a middle section intended to surround a blower of the turbojet engine.

12. The nacelle (1) according to any one of claims 1 to 11, **characterized in that**, in the folded position, the blocking flap (60) forms at least a portion of the air circulation surface.

13. The nacelle (1) according to any one of claims 1 to 12, **characterized in that**, in the folded position, the blocking flap (60) is totally stowed inside the mobile cowl (30).

14. The nacelle (1) according to any one of claims 1 to 13, **characterized in that** it comprises at least one deflector having a first end connected to the blocking flap (60) and a second end connected to the deflecting means (41) and designed to improve the aerodynamic continuity along a reverse air flow surface defined by the blocking flap and the deflector.
